(19) Europäisches Patentamt
European Patent Office
Office européen des brevets

(11) **EP 2 928 183 B1**

(12) **EUROPEAN PATENT SPECIFICATION**

(45) Date of publication and mention of the grant of the patent:
**16.10.2019 Bulletin 2019/42**

(21) Application number: **13859464.3**

(22) Date of filing: **26.11.2013**

(51) Int Cl.:
*H04N 9/04* *(2006.01)*          *H04N 5/33* *(2006.01)*
*H04N 9/73* *(2006.01)*          *H04N 9/77* *(2006.01)*

(86) International application number:
**PCT/JP2013/081735**

(87) International publication number:
**WO 2014/084199 (05.06.2014 Gazette 2014/23)**

(54) **IMAGE PICKUP DEVICE**

BILDAUFNAHMEVORRICHTUNG

DISPOSITIF DE CAPTURE D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2012 JP 2012261859**

(43) Date of publication of application:
**07.10.2015 Bulletin 2015/41**

(73) Proprietor: **Clarion Co., Ltd.**
**Saitama 330-0081 (JP)**

(72) Inventors:
• **USUI Tsutomu**
**Tokyo 100-8280 (JP)**

• **TAKAHASHI Teruki**
**Saitama-shi**
**Saitama 330-0081 (JP)**
• **YOSHIDA Daisuke**
**Tokyo 100-8280 (JP)**

(74) Representative: **Mewburn Ellis LLP**
**City Tower**
**40 Basinghall Street**
**London EC2V 5DE (GB)**

(56) References cited:
**WO-A1-2012/004910      JP-A- H08 294 037**
**JP-A- 2004 064 468      JP-A- 2010 161 459**
**US-A1- 2005 133 690      US-A1- 2008 049 115**

## Description

Technical Field

The present invention relates to an image pickup device.

Background Art

Background art of the technical field can be found in Patent Literature 1. Patent Literature 1 describes, "When performing an image pickup by using infrared image-pickup control, an infrared image-pickup signal is separated into visible light operation image-pickup signals with respect to each color and an infrared operation image-pickup signal. Furthermore, light source determination is performed based on a visible light image-pickup signal, a white balance image-pickup signal is generated based on the result of the light source determination, the white balance image-pickup signal is integrated with respect to each color, the color balance of the visible light operation image-pickup signal is matched, and thereby the color match image-pickup signal is generated. A white balance correction image-pickup signal is generated for the color match image-pickup signal based on the result of the light source determination, and an image processing is performed on the infrared operation image-pickup signal and the white balance correction image-pickup signal, thereby generating a color image signal.

JP2004064468 discloses an image pickup device that aims to be capable of carrying out image pickup with a satisfactory white balance by accurately judging the light source kind. In the disclosed CCD, a plurality of light receiving elements (red end-infrared sensors) mounted with a red end light transmitting filter for transmitting lights with wavelength which is 630nm or more is arranged between a plurality of light receiving elements mounted with a color filter so as to be spread across the CCD. Then, evaluation values for judging the light source kind are calculated based on the light reception result of the red end-infrared sensor, and the light source kind is judged based on the calculated evaluation values, and a gain value corresponding to the judged light source kind is decided. A white balance adjusting circuit adjusts the white balance by multiplexing a digital signal obtained by image pickup by the decided gain value.

US2008/049115 discloses an image pickup device that receives an incident light by way of a color filter that also transmits an infrared light component. For the purpose of correcting an infrared light component contained in an output signal, a control unit adds correcting infrared light components to image signals of multiple colors supplied from the image pickup device, respectively. To remove the infrared light components contained in the output signals, the correcting infrared light components are subtracted from the image signals of multiple colors supplied from the image pickup device. The control unit switches between an addition processing where an infrared light component is added and a subtraction processing where the infrared component is subtracted, according to a predetermined condition.

Citation List

PTL 1: Japanese Patent Laid-open No. 2010-161453

Summary of Invention

Technical Problem

There has been an increasing interest in preventive safety against traffic accidents, and an image pickup device for on-vehicle monitoring has been actively researched and developed as one factor of automobile driver assistance system. Main functions of the on-vehicle image pickup device include, for example, a function of recognizing a traffic lane being a road sign. In order to correctly identify the color of the traffic lane at this time, it is necessary to correctly reproduce the color of the traffic lane (for example, white). Furthermore, in order to correctly identify a type of a specific subject to be recognized other than the traffic lane (for example, a traffic sign), it is necessary to correctly reproduce the color of the subject. In addition, it is also required to recognize such subjects in a dark environment such as at night. For this purpose, it is now important to improve sensitivity of the image pickup device in a low-illuminance environment such as at night by using an infrared wavelength in addition to a visible light. Although a white balance processing is performed in order to correctly reproduce the color of the subject in the image pickup device using both the visible light and the infrared, such an image pickup device using the infrared may not be able to correctly reproduce the color reproducibility because, for example, the infrared wavelength is mixed into a color signal processing of the visible light causing a change in the color balance. Therefore, it is desirable that the color signal for controlling the white balance processing does not include any infrared component and also that it includes the same color component as that in the video signal used for a monitor display and an image recognition. The Patent Literature 1 describes that the color balance of the visible light operation image-pickup signal is matched based on the visible light color rate of the video signal with the infrared removed using an infrared cut filter. It should be noted that the visible light operation image-pickup signal is a visible light component of a visible light operation image-pickup signal and an infrared operation image-pickup signal separated from a video signal including the infrared. However, since the spectral characteristics in the red range to the infrared range of each filter do not generally match, and visible light characteristics using the infrared cut filter of the above known example are not equivalent to the color signal characteristics calculated by an operation without using the infrared cut filter due to the characteristics of the infrared cut filter, various light source characteristics in an actual environment, and infrared range removal accuracy based on an operation, there is still a room for an improvement of the color reproducibility of the white balance. Furthermore, the configuration requires the infrared cut filter as well as insertion/extraction of the infrared cut filter, which can also be further improved. The present invention provides an image pickup device capable of obtaining a luminance signal suitable for visibility and recognition even under a low illuminance and having high color reproducibility with a simple configuration when picking up an image of a subject using an infrared for a signal processing.

Solution to Problem

An outline of a representative embodiments of the invention disclosed herein can be briefly described as follows.

According to the present invention there is provided an image pickup device according to claim 1.

Advantageous Effects of Invention

According to the invention, it is possible to provide an image pickup device capable of obtaining a luminance signal suitable for visibility and recognition even under a low illuminance including an infrared light and having high color reproducibility with a simple configuration.

Brief Description of Drawings

Fig. 1 is a block diagram showing one embodiment of an image pickup device according to the invention.
Fig. 2 is a schematic showing a detection range of a white balance in a display section of the image pickup device.
Fig. 3 show an image of an average of RGB signals when there is no infrared signal within the detection range.
Fig. 4 show an image of an average of Rir, Gir, Bir signals when there is an infrared signal within the detection range.
Fig. 5 show an image of an average of R-ir, G-ir, B-ir signals when the infrared signal within the detection range is removed by signal processing.
Fig. 6 is a diagram showing spectral characteristics of an R filter, a G filter, a B filter, a W filter, and an Ir filter.
Fig. 7 is a diagram showing spectral characteristics of the R filter, the G filter, and the B filter when using an infrared cut filter.
Fig. 8 is a schematic showing a distribution image of the infrared signals on a display section of the image pickup device.
Fig. 9 is a chart showing an example of a processing flow of an appropriate white balance processing according to an infrared signal amount on the image pickup device.
Fig. 10 is a chart showing another example of the processing flow of the appropriate white balance processing according to the infrared signal amount on the image pickup device.
Fig. 11 is a chart showing another example of the processing flow of the appropriate white balance processing according to the infrared signal amount on the image pickup device.

Description of Embodiments

Hereinbelow, embodiments of the present invention are described with reference to drawings.

Example 1

This embodiment is described using an example of image pickup by an on-vehicle camera being one exemplary image pickup device. The on-vehicle image pickup device according to this embodiment is constituted by, as needed: an image pickup section 101 using at least four types of filters including a red range, a green range a blue range, and an infrared range; an extraction region processing section 102 that sets a region of at least one pixel specified by a system control section 106 on an infrared extraction processing section and a visible light extraction processing section to be described later; an infrared extraction processing section 103 that extracts signals including at least an infrared range signal of the region set by the extraction region processing section 102 from signals including a red range signal, a green range signal, a blue range signal, and the infrared range signal; a visible light extraction processing section 104 that generates signals including at least the red range signal, the green range signal, and the blue range signal of the region set by the extraction region processing section 102 from the signals including at least the red range signal, the green range signal, the blue range signal, and the infrared range signal; a white balance processing section 105 that performs signal processing by applying a prescribed color gain so that the red range signal, the green range signal, and the blue range signal reach desired values based on control information from the system control section 106 to be described later; the system control section 106 that controls the white balance processing section based on signal information from the infrared extraction processing section 103 and the visible light extraction section 104; and an output IF section 107 that converts the signals from the white balance processing section 105 into a prescribed video signal.

According to this configuration, the image pickup section 101 can obtain information of the infrared range in addition to the red range, the green range, and the blue range. By using this information, the system control section 106 extracts the image region including the infrared range in which the color cannot be correctly reproduced by the white balance processing in an image pickup environment including the infrared light using a simple configuration, and using the color signal with the extracted image region removed enables correct color gain control by the white balance processing. As a result, it is possible to obtain a luminance signal suitable for visibility and recognition even under low illuminance including the infrared light and thus to achieve the color reproducibility.

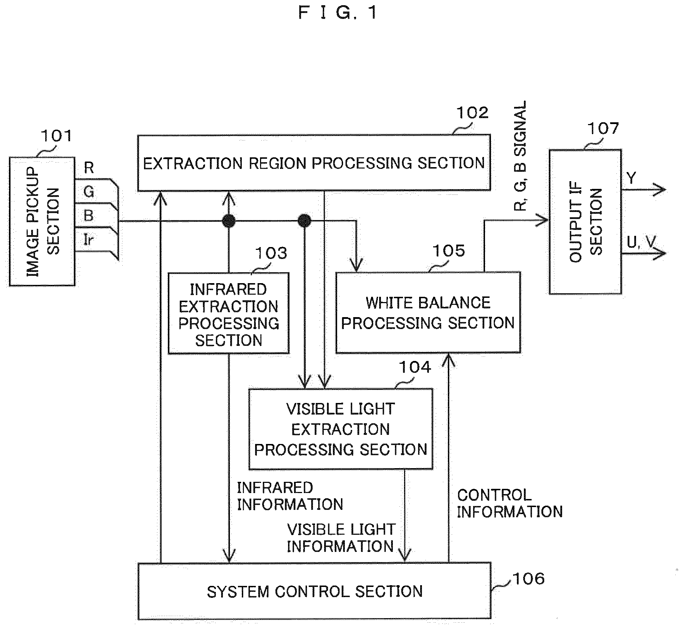

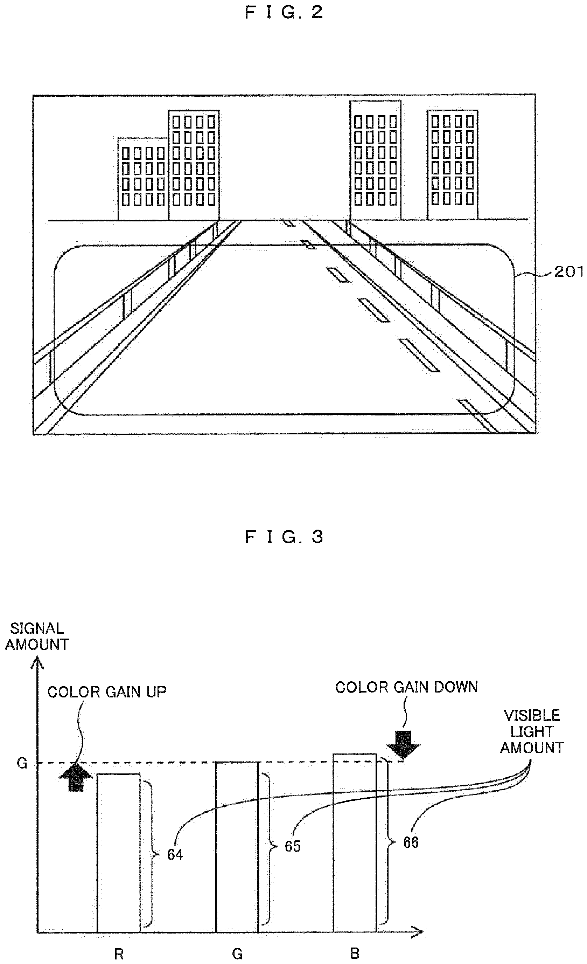

Now, the white balance processing using the red range signal, the green range signal, the blue range signal, and the infrared range signal controlled by the system control section 106 in Fig. 1 will be described in detail with reference to Figs. 2 to 8.

First, the white balance detection frame 201 shown in Fig. 2 is described. Fig. 2 is an image of a photographing screen of the on-vehicle image pickup device under the sunlight including the infrared, and this example shows a white balance detection frame excluding the sky that is very likely to be occupied by blue so that the color reproduction by the white balance can be correctly controlled due to the angle of view to reflect the road surface and the sky. Furthermore, in such a white balance detection frame, a proportion of a neutral portion such as the road surface, a white line, and a guardrail tends to increase.

Fig. 3 shows an example of an average of the red range, green range, and blue range signal amounts (hereinafter, R, G, and B) when the infrared range is cut by an infrared cut filter in the detection frame 201 of the photographing screen. It is assumed that the signal amount is represented in a range of 0 to 255 and that, for example, the R, G, and B signal amounts in the detection frame 201 are such values as 64, 65, and 66 because there are many neutral subjects as described above. For the white balance with respect to such exemplary video that does not include any infrared component, for example, when the white balance is adjusted by controlling the R signal and the B signal to match the G signal, the system control section 106 will control the white balance processing section 105 to increase the color gain for the R signal and to decrease the color gain for the B signal.

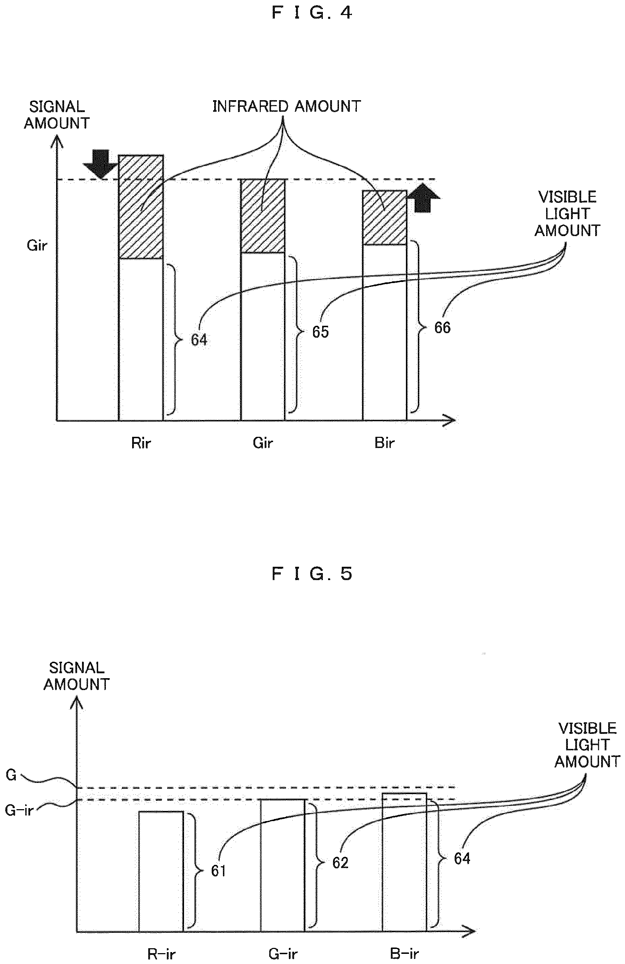

Fig. 4 shows an example of an average of the red range, green range, and blue range signal amounts including the infrared range (hereinafter, Rir, Gir, and Bir) in the detection frame 201 of the photographing screen in Fig. 2. Because the sunlight in the example of the photographing screen in Fig. 2 includes the infrared light, when using the signal amount indicated by Rir, Gir, and Bir according to the different infrared sensitivities of each color as shown in Fig. 4, the color signal can be different from the color signal levels when using the infrared cut filter as shown in Fig. 3, and when the white balance processing is performed using this signal as in Fig. 3, the system control section 106 in Fig. 1 controls the white balance processing section 105 to decrease the color gain for the Rir signal and to increase the color gain for the Bir signal, resulting in further emphasizing R and weakening B in the signal including the actual visible light components R =64, G =65, and B =66, which makes it difficult to correctly reproduce the colors by the white balance processing.

Thus, while the white balance processing described in Patent Literature 1 controls the white balance processing of the signal including the infrared using the signal information obtained from the visible light signal with its infrared cut by the infrared cut filter, there is a need for the infrared cut filter and also an infrared cut filter insertion/extraction.

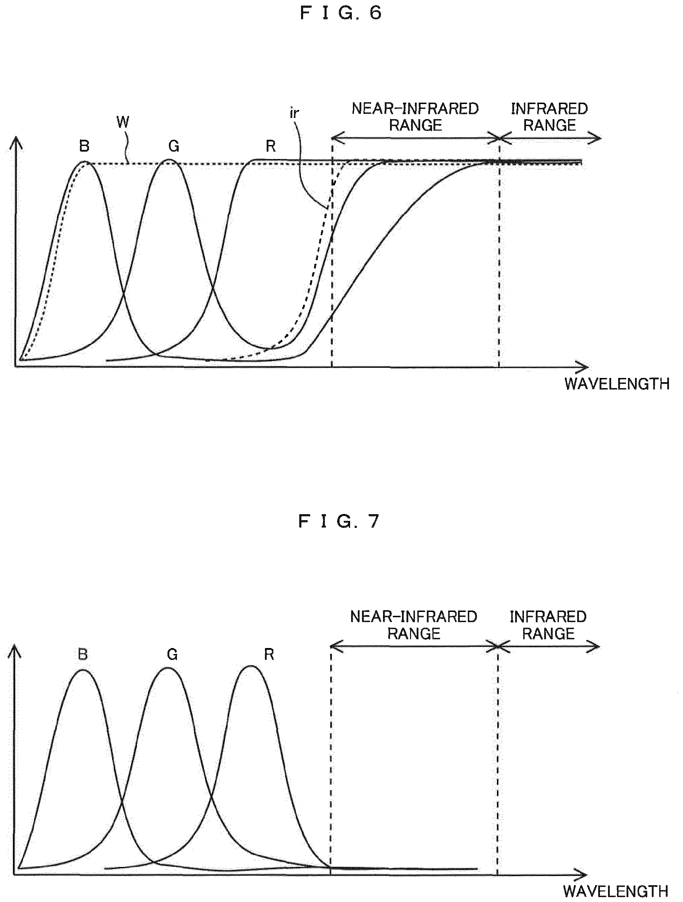

Fig. 5 shows an example of an average of the red range, green range, and blue range signal amounts with the infrared range (including the near-infrared range) removed by the signal processing (hereinafter, R-ir, G-ir, and B-ir), Fig. 6 shows an example of spectral sensitivity characteristics of RGBIr filters or RGBW filters, and Fig. 7 shows an example of the spectral characteristics taking into account the infrared cut filter. It is noted that the characteristics of the Ir filter among the above RGBIr filters allow for mainly transmitting the infrared range therethrough.

Such RGB signal characteristics as shown in Fig. 5 can be calculated using a signal processing operation generally called a color matrix operation as shown in Equations 1 to 4 operated by the visible light extraction processing section 104 shown in Fig. 1. Because the spectral characteristics of each filter in the infrared range as shown in Fig. 6, especially in the near-infrared range, are in general similar between the R filter and the W filter or between the R filter and the Ir filter but the G filter and the B filter have different characteristics especially in the near-infrared range, even if the near-infrared range signal is removed based on the magnitude relation of R > G > B signals taking into account each of the spectral characteristics of the R, G, B signals using the color matrix signal processing operation described above, the near-infrared characteristics of the G, B, W, or Ir cannot correctly remove the infrared, thus the average values of the R, G, B signals can be as shown in Fig. 5, and they cannot match Fig. 3 showing the average values of the R, G, B signals obtained from the example of the RGB signal characteristics using the infrared cut filter shown in Fig. 7.

$$[Equation\ 1]\ Output\ Rout = (Rin*\alpha r,\ Gin*\beta r,\ Bin*\gamma r,\ Irin*\Delta r)$$

$$[Equation\ 2]\ Output\ Gout = (Rin*\alpha g,\ Gin*\beta g,\ Bin*\gamma g,\ Irin*\Delta g)$$

$$[Equation\ 3]\ Output\ Bout = (Rin*\alpha b,\ Gin*\beta b,\ Bin*\gamma b,\ Irin*\Delta b)$$

$$[Equation\ 4]\ Output\ Iout = (Rin*\alpha w,\ Gin*\beta w,\ Bin*\gamma w,\ Irin*\Delta w)$$

wherein video signal outputs after the operation (outputs) can be Rout, Gout, Bout, and Iout, input video signals can be Rin, Gin, Bin, Iin, or Win, matrix coefficients to be multiplied to the input video signals to output each of the video outputs Rout, Gout, Bout, and Iout can be $\alpha$, $\beta$, $\gamma$, and $\Delta$, and, taking an example of the coefficient to be multiplied to Rin, the coefficient can vary with respect to each output signal such as $\alpha r$, $\alpha g$, $\alpha b$, and $\alpha w$.

Accordingly, even when performing the white balance processing using the signal that used the infrared cut filter, it is still difficult to reproduce the color by the correct white balance processing unlike the actual R, G, and B signal amount on which the signal processing is performed, and therefore there is still a room for improving the configuration and the color reproducibility according to this embodiment.

One method of relieving an influence when the visible light range includes the near-infrared may be removal of the near-infrared range using the infrared cut filter, but such an optical filter having steep characteristics is expensive, which is disadvantageous in terms of costs.

Thus, in the white balance processing according to the first embodiment, the system control section 106 determines whether an infrared component within the detection frame 201 shown in Fig. 2 and extracted by the infrared extraction processing section 103 with respect to each extraction region processed by the extraction region processing section 102 shown in Fig. 1 is no higher than a prescribed value. If the infrared component is no higher than the prescribed value, the visible light signal with little infrared component can be used for the white balance processing by the system control section 106 controlling the white balance processing based on the visible light signal in the same range as the above extraction region extracted by the visible light extraction processing section 104, which enables the correct color reproduction.

It should be noted that the magnitude of the infrared component amount derives from the different light sources or different infrared reflectance of the subject. However, this embodiment does not depend on the different light sources or the difference infrared reflectance of the subject, but the white balance processing is performed using the signal of the pixel that can provide a signal with less infrared among the signals of the picked-up image.

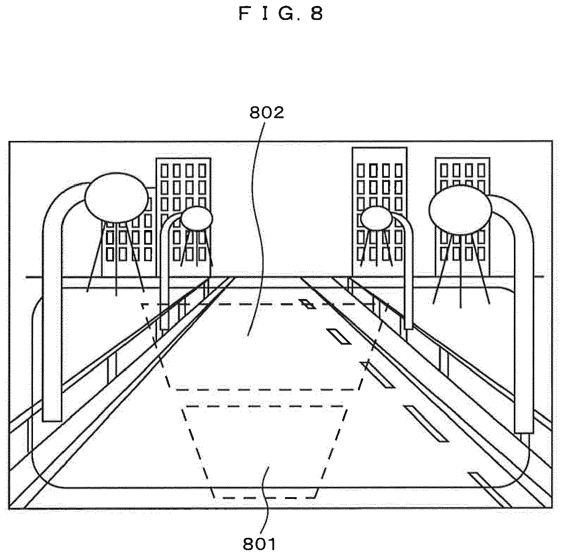

Furthermore, in a case of the night time when there are various lights such as a vehicle's headlight, a street lamp, a light from a building, and the like, it is assumed that the vehicle's headlight contains a lot of infrared components, that the signal indicative of the image of the subject in a region 801 in Fig. 8 illuminated by the light source such as the headlight contains a lot of infrared components, and that the signal indicative of the subject in a region 802 not illuminated by the light source such as the headlight contains little infrared. In such a case, the present invention performs the white balance processing mainly using the signal of the region 802 containing less infrared.

The region set by the extraction region processing section 102 shown in Fig. 1 is constituted by one or more pixels. For example, when the region is constituted by one pixel, it is determined whether the infrared amount in each pixel is no higher than a predetermined level, and if it is no higher than the predetermined level, the visible light signals (R, G, B signals) of the pixel are used for the white balance processing. Otherwise, when the region is constituted by a plurality of pixels, and when the total infrared amount of the pixels in the region is no higher than the predetermined value or when the number of pixels containing the infrared amount no higher than a predetermined level among the pixels in the region is no higher than a prescribed number, it can be determined to use the visible light signals in the region for the white balance processing.

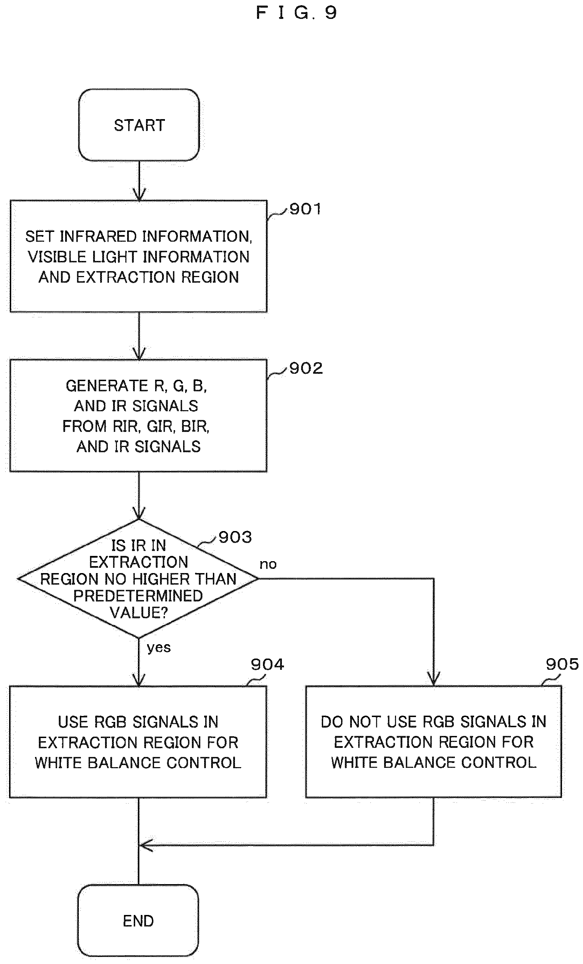

Fig. 9 is a chart illustrating an example of a processing flow of the appropriate white balance processing according to the infrared amount in the control performed by the system control section (Fig. 1) in the image pickup device.

First, at Step 901, infrared information in the photographing screen by the image pickup device and an extraction range of the visible light information are set to the extraction region processing section 102 (Fig. 1). At Step 902, the infrared signal information (Ir signal information) and the visible light signal information (R, G, B signal information) in the extraction range are obtained from the infrared extraction processing section 103 (Fig. 1). At Step 903, it is determined whether the infrared amount in the extraction region from Step 902 is no higher than the prescribed value. At Step 904, when the result of the determination at Step 903 is YES, the visible light signal information in the region generated at Step 902 is used for control information of the white balance processing because the signal in the extraction region contains less infrared component and has less influence on the color signal by the infrared. At Step 905, when the result of the determination at Step 903 is NO, the visible light information in the region generated at Step 902 is not used as the control information for the white balance processing because the signal in the extraction region contains a lot of infrared components and has more influence on the color signal by the infrared.

Based on the flow described above, it is determined whether the amount of the infrared components is no higher than the prescribed value with respect to the signals in each prescribed region and the visible light signals in the region with the infrared components no more than the prescribed value can be used for the white balance processing, thereby enabling the correct white balance processing using the color signals with less influence of the infrared even under the light source including infrared.

Example 2

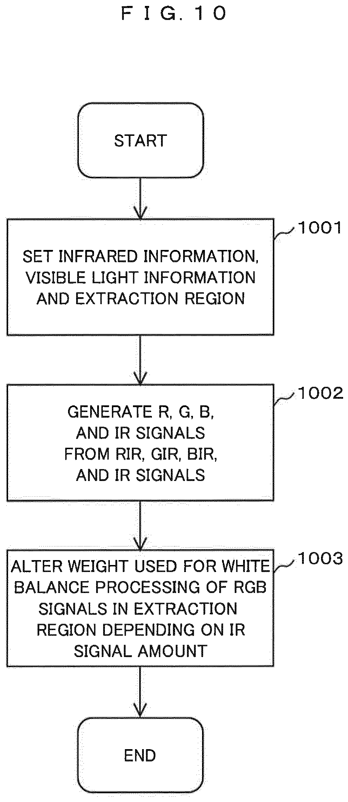

Fig. 10 is a chart illustrating an example of the processing flow of the appropriate white balance processing according to the infrared amount in the image pickup device.

Steps 1001 to 1002 are similar to Steps 901 to 902 in Fig. 9. At Step 1003, weighting of the visible light signal extracted at Step 1002 is adjusted according to the amount of the infrared (Ir) in each extraction region determined at Step 1002 with respect to the visible light signals (R, G, B signals) used for the white balance processing. For example, for the visible light signal used for the white balance processing, sum of the R, G, B signals is calculated for each pixel in the detection region, and the color gain is controlled so that the sums of the R, G, B signals are equal. When calculating the sums, as for the region including a large amount of the infrared in the extraction region, the R, G, B signal amount after adjustment is controlled depending on the relative amount of the infrared or controlled depending on the absolute amount of the infrared according to Equations 5 to 7 or Equations 8 to 10 so that the R, G, B signal values in the extraction region including more infrared become smaller to decrease the influence on the white balance processing. On the contrary as for the region including less infrared in the extraction region, the R, G, B signal values are not reduced in order to be correctly reflected on the white balance processing.

$$[\text{Equation 5}] \quad \text{Post-adjustment } R = R \times (R/(R + Ir))$$

$$[\text{Equation 6}] \quad \text{Post-adjustment } G = G \times (G/(G + Ir))$$

$$[\text{Equation 7}] \quad \text{Post-adjustment } B = B \times (B/(B + Ir))$$

$$[\text{Equation 8}] \quad \text{Post-adjustment } R = R \times (R/Ir)$$

$$[\text{Equation 9}] \quad \text{Post-adjustment } G = G \times (G/Ir)$$

$$[\text{Equation 10}] \quad \text{Post-adjustment } B = B \times (B/Ir)$$

According to the flow described above, by using the signal amount with the visible light signal in the extraction region adjusted according to the infrared component amount with respect to each signal of the prescribed extraction region for the white balance processing, the correct white balance processing weighting the color signal with little influence by the infrared becomes possible under the light source including the infrared.

Example 3

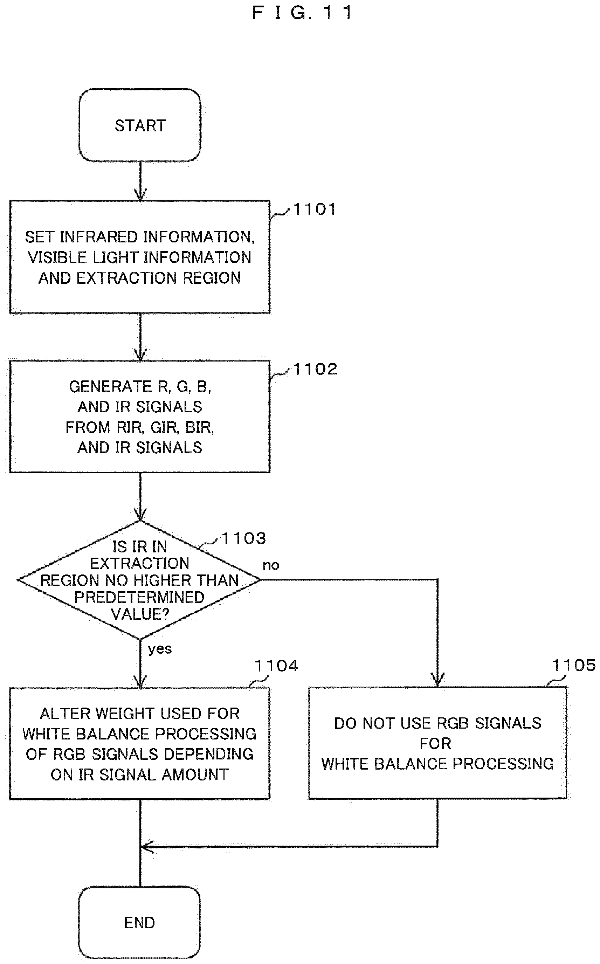

Fig. 11 is a chart illustrating an example of the processing flow of the appropriate white balance processing according to the infrared amount in the image pickup device.

Steps 1101 to 1103 are similar to Steps 901 to 903 in Fig. 9. At Step 1104, when the result of the determination at Step 1103 is YES, it is assumed that the signal in the extraction region has little influence on the color signal by the infrared (Ir), and the weighting of the visible light extracted at Step 1102 is adjusted according to the infrared amount in each region of the visible light signals (R, G, B signals) extracted at Step 1102 and used for the white balance processing.

At Step 1105, when the result of the determination at Step 1103 is NO, it is assumed that the signal in the extraction region has much influence on the color signal by the infrared, and therefore the visible light signal information in the same region generated at Step 1102 is not used as the control information for the white balance processing.

Based on the flow described above, it is determined whether the amount of the infrared components is no higher than the prescribed value with respect to the signals in each prescribed region, and the signal amount with the visible light signals in the extraction region adjusted according to the infrared component amount is used for the white balance processing with respect to the visible light signals in the region including no more infrared light than a prescribed value, thereby enabling the correct white balance processing using the color signals with less influence of the infrared even under the light source including infrared.

The present invention is not limited to the embodiments described above but includes various modifications. For example, the embodiments described above are detailed to explicitly explain the present invention, and the invention is not limited to necessarily include all the configurations described above. It is possible to replace a part of a configuration in one embodiment with a configuration in another embodiment and to add a configuration of one embodiment to a configuration of another embodiment. It is also possible to add another configuration to, delete, or replace a part of a configuration in each embodiment.

All or part of each configuration described above may be constituted by hardware or configured to be achieved by executing a program by a processor. The embodiments show control lines and information lines that are deemed to be essential for illustrative purpose but does not necessarily indicate all the control lines and information lines of the product. It may be considered that nearly all the configurations are actually connected to one another.

Reference Sings List

| | |
|---|---|
| 101 | Image pickup section |
| 102 | Extraction region processing section |
| 103 | Infrared extraction processing section |
| 104 | Visible light extraction processing section |
| 105 | White balance processing section |
| 106 | System control section |
| 107 | Output IF section |
| 201 | Detection frame |

**Claims**

1. An image pickup device, comprising:

an image pickup section (101) that picks up an image of a subject and that is sensitive to at least a red range, a green range, and a blue range of a visible light, and an infrared range;
an extraction region processing section (102) that sets extraction regions for extracting infrared signal information and visible light signal information in an image picked up by the image pickup section (101);
an infrared extraction processing section (103) that extracts infrared signal information from each of the regions of the image that were set by the extraction region processing section (102);
a visible light extraction processing section (104) that extracts visible light signal information from each of the regions of the image that were set by the extraction region processing section (102);

a white balance processing section (105) that conducts white balance processing on the image using a prescribed color gain; and

a system control section (106) that controls the white balance processing section (105), wherein the system control section (106), in accordance with the infrared signal information and visible light signal information extracted from each of the regions of the image, performs control so that the color gain of the white balance processing section (105) is set to a prescribed value using the visible light signal information of the region in which an infrared amount of the infrared signal information extracted by the infrared extraction processing section (103) is no higher than a predetermined value.

2. The image pickup device according to claim 1, wherein
the system control section (106) performs control so that the color gain of the white balance processing section (105) is set to the prescribed value based on the visible light signal information of each of the regions weighted according to an infrared amount of the infrared signal information in each region of the image extracted by the infrared extraction processing section (103).

3. The image pickup device according to claim 1, wherein
the system control section (106) performs control so that the color gain of the white balance processing section (105) is set to the prescribed value based on the visible light signal information weighted according to an infrared amount of the infrared signal information of the region in which the infrared amount is no higher than the prescribed level, in relation to the infrared amount of the regions extracted by the infrared extraction processing section (103).

**Patentansprüche**

1. Bildaufnahmevorrichtung, umfassend:

einen Bildaufnahmeabschnitt (101), der ein Bild einer Person aufnimmt und der mindestens für einen roten Bereich, einen grünen Bereich und einen blauen Bereich eines sichtbaren Lichts und einen Infrarotbereich empfindlich ist;

einen Extraktionsregionsverarbeitungsabschnitt (102), der Extraktionsregionen zum Extrahieren von Infrarotsignalinformationen und sichtbaren-Lichtsignalinformationen in einem durch den Bildaufnahmeabschnitt (101) aufgenommenen Bild einstellt;

einen Infrarotextraktionsverarbeitungsabschnitt (103), der Infrarotsignalinformationen aus jeder der Regionen des Bildes extrahiert, die durch den Extraktionsregionsverarbeitungsabschnitt (102) eingestellt worden sind;

einen sichtbaren-Lichtextraktionsverarbeitungsabschnitt (104), der sichtbare-Lichtsignalinformationen aus jeder der Regionen des Bildes extrahiert, die durch den Extraktionsregionsverarbeitungsabschnitt (102) eingestellt worden sind;

einen Weißabgleichverarbeitungsabschnitt (105), der eine Weißabgleichverarbeitung auf dem Bild durch Verwendung einer vorgeschriebenen Farbverstärkung durchführt; und

einen Systemsteuerungsabschnitt (106), der den Weißabgleichverarbeitungsabschnitt (105) steuert, wobei der Systemsteuerungsabschnitt (106) gemäß den Infrarotsignalinformationen und den sichtbaren-Lichtinformationen, die aus jeder der Regionen des Bildes extrahiert werden, eine Steuerung derart durchführt, dass die Farbverstärkung des Weißabgleichverarbeitungsabschnitts (105) auf einen vorgeschriebenen Wert eingestellt wird, und zwar durch Verwendung der sichtbaren-Lichtsignalinformationen der Region, in der ein Infrarotanteil der durch den Infrarotextraktionsverarbeitungsabschnitt (103) extrahierten Infrarotsignalinformationen nicht höher als ein vorbestimmter Wert ist.

2. Bildaufnahmevorrichtung gemäß Anspruch 1,
wobei der Systemsteuerungsabschnitt (106) eine Steuerung derart durchführt, dass die Farbverstärkung des Weißabgleichverarbeitungsabschnitts (105) auf einen vorgeschriebenen Wert eingestellt wird, und zwar auf Basis der sichtbaren-Lichtsignalinformationen von jeder der Regionen, die gemäß einem Infrarotanteil der Infrarotsignalinformationen in jeder Region des durch den Infrarotextraktionsverarbeitungsabschnitt (103) extrahierten Bildes gewichtet werden.

3. Bildaufnahmevorrichtung gemäß Anspruch 1,
wobei der Systemsteuerungsabschnitt (106) eine Steuerung derart ausführt, dass die Farbverstärkung des Weißabgleichverarbeitungsabschnitts (105) auf den vorgeschriebenen Wert eingestellt wird, und zwar auf Basis der sichtbaren-Lichtsignalinformationen, die gemäß einem Infrarotanteil der Infrarotsignalinformationen der Region gewichtet werden, in welcher der Infrarotanteil im Verhältnis zum Infrarotanteil der durch den Infrarotextraktionsverarbeitungsabschnitt (103) extrahierten Regionen nicht höher als der vorgeschriebene Pegel ist.

**Revendications**

1. Dispositif de capture d'image, comprenant :

une section de capture d'image (101) qui capture une image d'un sujet et qui est sensible à au moins une plage rouge, une plage verte et une plage bleue d'une lumière visible, et à une plage d'infrarouge ;
une section de traitement de région d'extraction (102) qui définit des régions d'extraction pour extraire des informations de signal infrarouge et des informations de signal de lumière visible dans une image capturée par la section de capture d'image (101) ;
une section de traitement d'extraction d'infrarouge (103) qui extrait des informations de signal infrarouge de chacune des régions de l'image qui ont été définies par la section de traitement de région d'extraction (102) ;
une section de traitement d'extraction de lumière visible (104) qui extrait des informations de signal de lumière visible de chacune des régions de l'image qui ont été définies par la section de traitement de région d'extraction (102) ;
une section de traitement de balance des blancs (105) qui effectue un traitement de balance des blancs sur l'image en utilisant un gain de couleur prescrit ; et
une section de commande de système (106) qui commande la section de traitement de balance des blancs (105), dans lequel
la section de commande de système (106), en fonction des informations de signal infrarouge et des informations de signal de lumière visible extraites à partir de chacune des régions de l'image, effectue une commande de sorte que le gain de couleur de la section de traitement de balance des blancs (105) soit établi à une valeur prescrite à l'aide des informations de signal de lumière visible de la région dans laquelle une quantité d'infrarouge des informations de signal infrarouge extraites par la section de traitement d'extraction d'infrarouge (103) ne dépasse pas une valeur prédéterminée.

2. Dispositif de capture d'image selon la revendication 1, dans lequel
la section de commande de système (106) effectue une commande de sorte que le gain de couleur de la section de traitement de balance des blancs (105) soit établi à la valeur prescrite sur la base des informations de signal de lumière visible de chacune des régions pondérées en fonction d'une quantité d'infrarouge des informations de signal infrarouge dans chaque région de l'image extraite par la section de traitement d'extraction d'infrarouge (103).

3. Dispositif de capture d'image selon la revendication 1, dans lequel
la section de commande de système (106) effectue une commande de sorte que le gain de couleur de la section de traitement de balance des blancs (105) soit établi à la valeur prescrite sur la base des informations de signal de lumière visible pondérées en fonction d'une quantité d'infrarouge des informations de signal infrarouge de la région dans laquelle la quantité d'infrarouge n'est pas supérieure au niveau prescrit, par rapport à la quantité d'infrarouge des régions extraites par la section de traitement d'extraction d'infrarouge (103).

F I G. 1

# F I G. 2

# F I G. 3

F I G. 4

F I G. 5

## F I G. 6

## F I G. 7

13

F I G. 8

F I G. 9

```
                    ┌─────────────┐
                    │    START    │
                    └──────┬──────┘
                           │
                           ▼
        ┌──────────────────────────────────┐  ╭901
        │  SET INFRARED INFORMATION,       │
        │  VISIBLE LIGHT INFORMATION       │
        │  AND EXTRACTION REGION           │
        └──────────────────┬───────────────┘
                           │
                           ▼
        ┌──────────────────────────────────┐  ╭902
        │      GENERATE R, G, B,           │
        │      AND IR SIGNALS              │
        │      FROM RIR, GIR, BIR,         │
        │      AND IR SIGNALS              │
        └──────────────────┬───────────────┘
                           │
                           ▼
                  ╱─────────────────╲  ╭903
                 ╱    IS IR IN       ╲
                ╱    EXTRACTION       ╲      no
              ◇  REGION NO HIGHER THAN  ◇───────────────┐
                ╲   PREDETERMINED      ╱                 │
                 ╲     VALUE?         ╱                  │
                  ╲─────────────────╱                   │
                           │ yes                         │
                           ▼                             ▼
        ┌──────────────────────────┐904  ┌──────────────────────────┐905
        │   USE RGB SIGNALS IN     │     │ DO NOT USE RGB SIGNALS IN│
        │ EXTRACTION REGION FOR    │     │  EXTRACTION REGION FOR   │
        │ WHITE BALANCE CONTROL    │     │  WHITE BALANCE CONTROL   │
        └──────────────┬───────────┘     └──────────────┬───────────┘
                       │                                │
                       │◄───────────────────────────────┘
                       ▼
                ┌─────────────┐
                │     END     │
                └─────────────┘
```

F I G. 1 0

```
┌─────────────┐
│    START    │
└─────────────┘
       │
       ▼
┌──────────────────────────┐  ╱1001
│  SET INFRARED INFORMATION,│
│  VISIBLE LIGHT INFORMATION│
│   AND EXTRACTION REGION   │
└──────────────────────────┘
       │
       ▼
┌──────────────────────────┐  ╱1002
│     GENERATE R, G, B,     │
│      AND IR SIGNALS       │
│    FROM RIR, GIR, BIR,    │
│      AND IR SIGNALS       │
└──────────────────────────┘
       │
       ▼
┌──────────────────────────┐  ╱1003
│ ALTER WEIGHT USED FOR WHITE│
│ BALANCE PROCESSING OF RGB │
│   SIGNALS IN EXTRACTION   │
│    REGION DEPENDING ON IR │
│      SIGNAL AMOUNT        │
└──────────────────────────┘
       │
       ▼
┌─────────────┐
│     END     │
└─────────────┘
```

F I G. 1 1

```
        ┌──────────┐
        │  START   │
        └──────────┘
             │
             ▼
┌─────────────────────────────┐  ⌒1101
│  SET INFRARED INFORMATION,  │
│  VISIBLE LIGHT INFORMATION  │
│   AND EXTRACTION REGION     │
└─────────────────────────────┘
             │
             ▼
┌─────────────────────────────┐  ⌒1102
│     GENERATE R, G, B,       │
│      AND IR SIGNALS         │
│    FROM RIR, GIR, BIR,      │
│      AND IR SIGNALS         │
└─────────────────────────────┘
             │
             ▼
        ╱◇────────◇╲   ⌒1103
      ╱   IS IR IN    ╲
     ╱   EXTRACTION    ╲  no
    ◇ REGION NO HIGHER THAN ◇───────────┐
     ╲ PREDETERMINED  ╱                 │
      ╲   VALUE?    ╱                    │
        ╲◇────────◇╱                     │
             │ yes                       │
             ▼                           ▼
┌─────────────────────────────┐ ⌒1104  ┌──────────────────────┐ ⌒1105
│   ALTER WEIGHT USED FOR     │        │  DO NOT USE RGB SIGNALS│
│ WHITE BALANCE PROCESSING    │        │         FOR            │
│ OF RGB SIGNALS DEPENDING    │        │ WHITE BALANCE PROCESSING│
│    ON IR SIGNAL AMOUNT      │        │                        │
└─────────────────────────────┘        └──────────────────────┘
             │                           │
             ◄───────────────────────────┘
             │
             ▼
        ┌──────────┐
        │   END    │
        └──────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004064468 B
- US 2008049115 A
- JP 2010161453 A